# EUROPÄISCHE PATENTSCHRIFT

(11) **EP 2 810 758 B1**
(45) Veröffentlichungstag und Bekanntmachung des Hinweises auf die Patenterteilung: **02.11.2016**
(21) Anmeldenummer: 14171437.8
(22) Anmeldetag: 06.06.2014
(51) Int. Cl.: B29C 33/64

(54) **VERWENDUNG EINES TRENNMITTELS FÜR DIE HERSTELLUNG VON POLYURETHAN-FORMKÖRPERN**
USE OF A RELEASE AGENT FOR THE MANUFACTURE OF POLYURETHANE MOULDED BODIES
UTILISATION D'UN AGENT DE SÉPARATION POUR LA FABRICATION DE CORPS MOULÉS EN POLYURÉTHANE

(30) Priorität: 06.06.2013 DE 102013009458
(43) Veröffentlichungstag der Anmeldung: 10.12.2014
(73) Patentinhaber: Acmos Chemie KG, 28199 Bremen (DE)
(72) Erfinder: Schneider, Valentina, 28259 Bremen (DE); Klyszcz-Nasko, Holger, 28816 Stuhr (DE); Prochnow, Peter, 28199 Bremen (DE)
(74) Vertreter: Scholz, Volker

(56) Entgegenhaltungen:
- WO-A1-2010/081462
- DE-A1-102007 027 027
- DE-A1-102010 001 531
- US-A- 4 936 917
- US-A1- 2011 165 206
- US-A1- 2012 294 819
- CLAUDIA M. GROZEA ET AL: "Approaches in designing non-toxic polymer surfaces to deter marine biofouling", SOFT MATTER, Bd. 5, 2009, Seiten 4088-4100, XP002732167,

## Beschreibung

Die vorliegende Erfindung betrifft die Verwendung eines Trennmittels zur Herstellung von Polyurethan-Formkörpern.

Trennmittel werden überall dort eingesetzt, wo die Adhäsion von Formstoffen gegenüber den Formen, die beispielsweise aus thermisch stark leitfähigen Werkstoffen, wie Metallen, hergestellt sind, so groß ist, dass eine zerstörungsfreie Entnahme des Formteils aus einer Geometrie gebenden Form ohne solche Trennmittel nicht möglich ist. Beispielsweise benötigt man bei der Entformung von Polyurethan-Formkörpern Trennmittel, die auf die mit Polyurethanen und/oder der Polyurethan-Reaktionsmischung in Berührung kommenden Formwandungen aufgebracht werden. Dabei können die für die Entformung notwendigen Trennmittel aus Dispersionen und Lösungen von Wachsen, Seifen, Ölen und Silikonen (Polysiloxanen) in Trägermedien, wie z.B. Lösungsmitteln (Kohlenwasserstoffen) oder Wasser, aufgebaut sein. Die Lösungsmittel verdampfen nach Aufbringen des Trennmittels von der Formenoberfläche, und ein dünner Trennfilm bleibt zurück, der die einfache Entnahme des Formteils ermöglicht.

Moderne Trennmittel, z.B. für Polyurethan, haben neben der Aufgabe der Trennwirkung weitere Funktionen, die die Oberflächen der Formteile betreffen. Bei entsprechender Auswahl der Rohstoffe können Zelligkeit, Haptik, Farbe, Glanz und Verkleb- und Lackierbarkeit des Formkörpers beeinflusst werden. Beispielsweise dienen offene Formbauteiloberflächen bei Schallisolationsbauteilen dazu, Schall zu absorbieren. Bei Autositzkissen aus Polyurethan sind glatte Oberflächen, d.h. eine glatte Haptik, sehr hilfreich beim Beziehen der Sitze mit Stoffen.

Als trennaktive Substanzen werden am häufigsten Wachse, Öle und vor allen Dingen Silikonverbindungen allein oder in Kombinationen eingesetzt. Insbesondere die Silikone zeigen eine hervorragende Trennwirkung und eine sehr geringe Neigung zum Formenaufbau. Nachteilig für diese Verbindungen sind das Auftreten von Schaumstörungen bis hin zum großflächigen Schaumkollaps, sowie die Tendenz einen zu hohen Oberflächenglanz und eine zu hohe Fettigkeit der Oberfläche der entformten Teile zu erzeugen.

Als Haptik, bzw. haptische Wahrnehmung, soll hierbei das "Begreifen" im Wortsinne, also die Wahrnehmung durch Berühren verstanden werden. Erfasste Objekteigenschaften sind hierbei insbesondere die Oberflächentextur und die Nachgiebigkeit des Objekts.

In bekannten Trennmittelsystemen werden heute oberflächenaktive Substanzen vom Typ der Silikonpolyalkenoxidether eingesetzt, um die Zelligkeit der Oberfläche der Schaumteile zu regulieren und Oberflächendefekte zu reduzieren, wie es beispielsweise aus der US 4,936,917 bekannt ist. DE 10 2010 001 531 postuliert die Einsatzfähigkeit von Silikonpolyalkenoxidethern, welche darüber hinaus quaternäre Ammoniumgruppen enthalten.

Aus der EP 0 207 192 sind Organopolysiloxane als interne Trennmittel für isocyanatgebundene lignocellulosehaltige Formkörper bekannt. Die Organopolysiloxane weisen polare Reste auf, die aus Polyoxyalkylenresten, Aminresten sowie Resten mit Carboxylgruppen, Sulfonsäuregruppen oder deren Salze und quaternären Ammoniumresten ausgewählt werden. DE 10 2007 027 027 und DE 10 2010 001 531 postulieren den Einsatz von Organopolysiloxanen mit quaternären Ammoniumresten als Trennmittel.

Polysiloxane, die quaternäre Stickstoffreste enthalten, werden in der Kosmetik- und Textilindustrie verwendet. In der Textilindustrie werden diese Rohstoffe zum Ausrüsten der Fasern verwendet, um das Knittern zu verringern und das Bügeln zu vereinfachen. In der Kosmetikindustrie finden diese Stoffe als Haarreparatur und Kämmhilfe Verwendung. Weiterhin weisen diese Verbindungen eine geringe Toxizität und gute Hautverträglichkeit auf. Beispielhafte Polysiloxane mit quaternären Stickstoffresten (Ammoniumresten) sind aus der EP 1 000 959 A2 und EP 1 975 193 A1 bekannt.

Aufgabe der vorliegenden Erfindung ist es, ein Trennmittel für die Herstellung von Polyurethan-Formkörpern bereitzustellen, das die Nachteile des Stands der Technik überwindet, insbesondere eine erhöhte Trennwirkung zeigt, welches einen reduzierten Trennmittelaufbau erzeugt eine dem Kundenwunsch entsprechende und einstellbare Haptik des Formteils hinterlässt sowie keine Schaumstörungen im oder auf der Oberfläche des entformten Formteils erzeugt. Auch soll der Arbeitsschutz beim Versprühen des Trennmittels gewährleistet werden.

Diese Aufgabe wird gelöst durch die Verwendung eines Trennmittels zur Herstellung von Polyurethan-Formkörpern, wobei das Trennmittel umfasst: i) zumindest ein Trägermedium ausgewählt aus Wasser und/oder organischem Lösungsmittel, ii) zumindest ein Polysiloxan, das zumindest einen quaternären Stickstoffrest aufweist, iii) vorzugsweise zumindest ein bei Raumtemperatur festes Polysiloxan, vorzugsweise ausgewählt aus der Gruppe der Silikonharze und/oder Silikonwachse, und iv) zumindest eine trennaktive Substanz ausgewählt aus der Gruppe der Wachse, Polysiloxane ohne quaternären Stickstoffrest, Seifen und Öle, vorzugsweise ausgewählt aus der Gruppe der reaktiven Polysiloxane ohne quaternären Stickstoffrest, reaktiven Seifen oder reaktiven Öle.

Bei dem bei Raumtemperatur (20-25°C) festen Polysiloxan gemäß iii) handelt es sich bevorzugt um ein festes Polysiloxan ohne quaternären Stickstoffrest.

Auch ist bevorzugt, dass die reaktiven Polysiloxane ohne quaternären Stickstoffrest Silikonöle mit Hydroxy- und/oder Aminfunktionen sind. Vorzugsweise werden durch die Anwesenheit der Hydroxy- oder Amin-Funktionen weitere chemische Reaktionen ermöglicht. Neben OH-terminierten Polysiloxanen sind auch andere zur weiteren Reaktion befähigte Polysiloxane als erfindungsgemäß bevorzugt umfasst.

Ebenso bevorzugt vorgesehen ist, dass die reaktiven Seifen zur Esterbildung befähigte Carboxylat-Anionen enthalten.

Ebenso ist bevorzugt, dass die reaktiven Öle mit Doppelbindungen versehene Polybutadiene sind. Hierbei ist erfindungsgemäß vorgesehen, dass mit Hilfe besagter reaktiver Doppelbindungen die reaktiven Öle zu weiteren Reaktionen befähigt sind.

Unter reaktiv, bzw. chemisch reaktiv, ist hierbei eine chemische Funktionalität im trennaktiven Molekül zu verstehen, welche unter normalen Bedingungen, z.B. bei Raumtemperatur und/oder unter Anwendungsbedingungen, mit einem Reaktionspartner umgesetzt werden könnte.

Die im vorangehenden genannten bevorzugten Ausführungsformen sollen hierbei als beispielhaft und nicht abschließend verstanden werden.

Als Wachs soll hierbei eine unter die technologische Sammelbezeichnung fallende Verbindung aus der Reihe natürlich oder künstlich gewonnener Stoffe, die in der Regel bei 20°C knetbar, fest bis brüchig hart, grob- bis feinkristalling, durchscheinend bis opak, jedoch nicht glasartig, über 40°C ohne Zersetzung schmelzend, schon wenig oberhalb des Schmelzpunktes verhältnismäßig niedrigviskos und nicht fadenziehend sind und die in ihrer Konsistenz und Löslichkeit stark temperaturabhängig, sowie unter leichten Druck polierbar sind, verstanden werden.

Ferner ist bevorzugt, dass das Polysiloxan, das zumindest einen quaternären Stickstoffrest aufweist, die folgende Struktur aufweist: 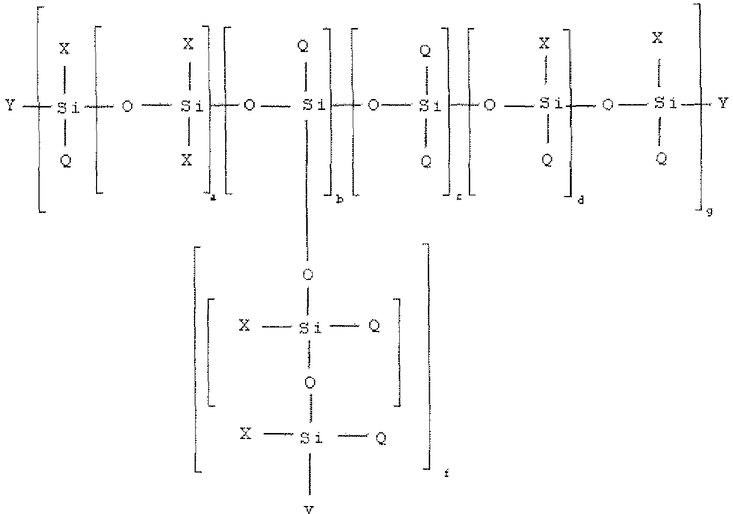 mit a = 1-500, b = 0-50, c = 0-20, d = 0-500, e = 0-500, f = 0-1 und g = 1-30;
wobei jedes X unabhängig voneinander ausgewählt ist aus der Gruppe bestehend aus Alkyl, Alkenyl, Alkylen, Aryl, Carbinol, Hydroxy, Alkoxy, Polyalkylenoxy, Epoxy-haltigem Rest, Keto-haltigem Rest, Carboxy-haltigem Rest, Amin-haltigem Rest, Amid-haltigem Rest und Kombinationen derselben;
Y unabhängig ausgewählt ist aus der Gruppe bestehend aus Alkyl, Alkenyl, Alkylen, Aryl, Carbinol, Hydroxy, Alkoxy, Polyalkylenoxy, Epoxy-haltigem Rest, Keto-haltigem Rest, Carboxy-haltigem Rest, Amin-haltigem Rest, Amid-haltigem Rest und Kombinationen derselben; oder, wenn die Grundstruktur in einem Block-Copolymer vorliegt, Y unabhängig ausgewählt ist aus der Gruppe bestehend aus Alkylen, -O-, -NR-, Alkylenoxid, Polyalkylenoxid, -NCOOR-, -RNCONR- und Kombinationen derselben, wobei R ausgewählt ist aus der Gruppe bestehend aus H, Alkyl, Alkenyl, Aryl;
zumindest ein Q einen quaternären Stickstoffrest enthält, der über eine organische Gruppe am Silizium angebunden ist, wobei die organische Gruppe bevorzugt eine Alkylengruppe, Alkylenoxid-Gruppe, Polyalkylenoxid-Gruppe, Epoxy-haltige Gruppe, Keto-Gruppe, Carboxy-Gruppe, Amin-Gruppe, Amid-Gruppe oder Kombinationen derselben enthält und jedes andere Q ausgewählt ist aus X.

Es ist für einen Fachmann auf dem Gebiet offensichtlich, dass die oben gezeigte Struktur für das Polysiloxan so zu verstehen ist, dass die gezeigten Strukturelemente a, b, c und d selbstverständlich nicht in dieser Reihenfolge im Polysiloxan vorliegen müssen, sondern völlig frei, beispielsweise statistisch oder blockartig, im Polysiloxan vorliegen können.

In einer besonders bevorzugten Ausführungsform ist X gleich Y.

Wird für X und Y ein N-haltiger Rest ausgewählt, so ist der Stickstoff in den allermeisten Fällen nicht direkt an ein Silzium-Atom angefügt, sondern über einen Spacer, der beispielsweise R sein kann.

Aus der oben gegebenen Definition für Q ergibt sich somit ohne weiteres, dass es in einem Polysiloxan, das zumindest einen quaternären Stickstoffrest aufweist, unterschiedliche Q geben kann, solange zumindest ein Q einen quaternären Stickstoffrest enthält. Alle weiteren Qs können aus der für X gegebenen Gruppe ausgewählt werden.

Im Trennmittel können Polysiloxane mit quaternären Stickstoffresten eingesetzt werden, die in den Seitenketten des Polysiloxans einen quaternären Stickstoffrest enthalten (Kammstruktur). Darüber hinaus können quaternäre Stickstoffreste auch, alleine oder zusätzlich, in einer alpha-omega-endständigen Position vorliegen. Auch ist es erfindungsgemäß möglich, dass mehr als ein quaternärer Stickstoffrest an einer organischen Gruppe angefügt ist. Als mögliche Abstandshalter zur Anfügung an die Hauptkette sind insbesondere Alkylen- und Alkylenoxygruppen einsetzbar.

Die organische Gruppe, die den quaternären Stickstoffrest mit dem Silizium verbindet, kann ggf. weitere funktionelle Gruppen tragen, wie beispielsweise Hydroxy oder Halogen.

Insbesondere Alkyl, Alkenyl, Alkylen, Aryl und Carbinol für X und Y können teilweise oder vollständig halogeniert sein.

Alle in den obigen Formeln und in den weiteren Formeln in dieser Anmeldung gegebenen Definitionen für bestimmte Reste sind ausdrücklich so zu verstehen, dass sie sich ausschließlich auf die Definition der jeweiligen Reste in der unmittelbar zuvor aufgeführten Formel beziehen.

Besonders bevorzugt ist, dass der quaternäre Stickstoffrest die Formel N⁺(R¹)(R²)(R³)(R⁴) aufweist, wobei jedes R¹-R⁴ unabhängig voneinander ausgewählt ist aus H, C₁-C₂₀-Alkyl, C₁-C₂₀-Alkenyl und C₁-C₁₀-Alkoxy, wobei insbesondere die Alkyl- oder Alkenylreste bevorzugt weitere funktionelle Gruppen, wie Hydroxylgruppen Ketogruppen und/oder Carboxygruppen, aufweisen können.

Besonders bevorzugt sind auch quaternäre Stickstoffreste der folgenden Formeln 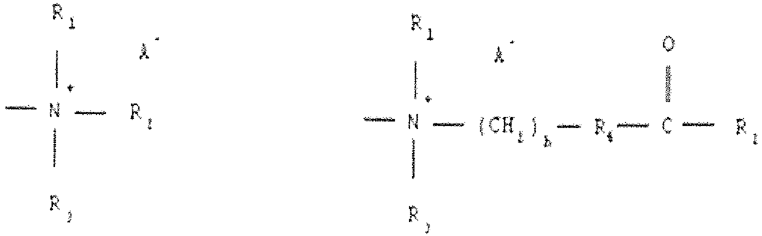 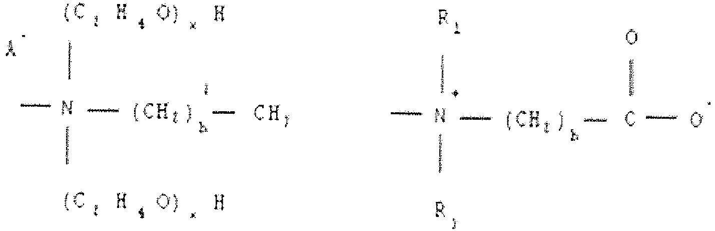 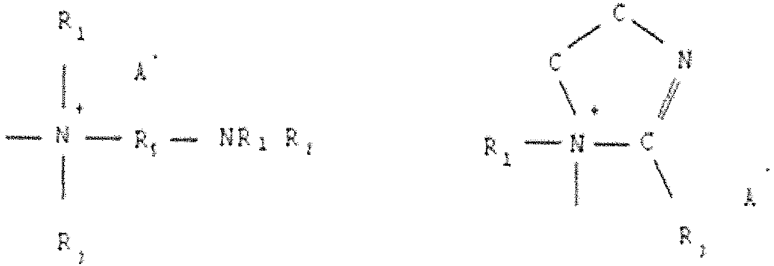 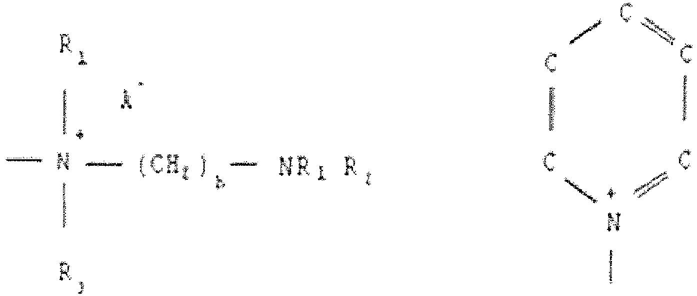 wobei
R1, R2, R3, R4, R9 gleich oder verschieden voneinander sein können und jeweils unabhängig voneinander Wasserstoff, Alkyl oder Alkenyl mit 1 bis 22 C-Atomen sind, wobei die Alkyl-oder Alkylenreste Hydroxylgruppen aufweisen können oder Fluor, Chlor der Bromsubstituierte Alkylreste sein können
R4 = -O- oder -NR9- ist,
R5 = ein gegebenenfalls verzweigter Alkylenrest
h = 1 bis 30,
x = 1 bis 30,
A = ein Gegenion zu den positiven Ladungen an den quaternierten Stickstoffgruppen, ausgewählt aus anorganischen oder organischen Anionen physiologisch verträglicher Säure HA ist.

In einer besonders bevorzugten Ausführungsform weist das Polysiloxan mit quaternärem Stickstoffrest zumindest eine Alkoxy- und/oder Alkylenoxid-Gruppe auf. Diese kann beispielsweise in Form von alternierenden Monomereinheiten mit den Siloxaneinheiten in der Hauptkette angeordnet sein. Alternativ oder zusätzlich können die Alkoxy- und/oder Alkylenoxid-Gruppen auch in Seitenketten des Polysiloxans angeordnet sein.

Copolymere, in denen die Polysiloxane einen quaternären Ammoniumrest enthalten, sind besonders bevorzugt aufgebaut aus alternierenden Einheiten der Formel (X(CₐH₂ₐO)_{b}R²{SiO(R¹)₂}_{c}Si(R¹)₂R²(OCₐH₂ₐ)_{b}X) und der Formel (YO(CₐH₂ₐO)_{d}Y), worin jedes R¹ unabhängig eine C₁- bis C₄-Alkylgruppe ist, R² ein zweiwertiger organischer Rest ist, X und Y zweiwertige organische Gruppen sind, ausgewählt aus der Gruppe bestehend aus sekundären und tertiären Aminen und ringgeöffneten Epoxiden, so dass, wenn X ein ringgeöffnetes Epoxid ist, Y ein Amin ist und umgekehrt, a 2 bis 4 ist, jedes Vorkommen von b 0 bis 100 ist, d 0 bis 100 ist, (b+d) 1 bis 100 ist und c 1 bis 500 ist. Besonders bevorzugt ist dabei, dass die sekundären und tertiären Amine der Struktur -R⁴N(R³)(R⁴)_{g}- entsprechen, worin R³ eine Alkylgruppe mit 1 bis 4 Kohlenstoffatomen oder Wasserstoff ist, R⁴ eine Alkylen-, cycloaliphatische Alkylen- oder eine Aralkylengruppe ist, welche Heteroatome einschließen können, und g 0 oder 1 sein kann.

Besonders bevorzugte Polysiloxane mit einem quaternären Stickstoffrest sind aus der EP 1 000 959 A2 und EP 1 975 193 A1 bekannt, die hierin durch Bezugnahme eingeschlossen sind.

Außerdem kann bevorzugt vorgesehen sein, dass die positive Ladung des quaternären Stickstoffrests durch ein Anion, vorzugsweise Chlorid oder Acetat, neutralisiert ist.

Es ist bevorzugt vorgesehen, dass die weitere trennaktive Substanz ausgewählt ist aus flüssigen, festen, natürlichen und synthetischen Wachsen, optional behandelt, chemisch modifiziert oder verseift, Estern von Carbonsäuren mit Alkoholen oder Fettalkoholen, Metallseifen, Ölen oder sonstigen flüssigen Kohlenwasserstoffen oder Silikonen ohne quaternären Stickstoffrest.

Im Trennmittel liegt das Polysiloxan, das zumindest einen quaternären Stickstoffrest aufweist, in einer Menge von 0,1-20 Gew.%, bevorzugt 0,5-20 Gew.-% der Gesamtmenge des erfindungsgemäßen Trennmittels vor.

Überraschenderweise wurde gefunden, dass der Einsatz des Trennmittels die Trennwirkung verbessert und die Oberfläche des Formkörpers hinsichtlich der Haptik positiv beeinflusst, ohne Schaumstörungen zu erzeugen, sowie gleichzeitig wenig Aufbau zeigt.

Die Trennmittel zeichnen sich ferner dadurch aus, dass sie eine gute Löslichkeit im frischen, flüssigen Polyurethanschaum besitzen und sich in der Grenzfläche des Trennmittels und des Schaums bevorzugt anlagern, ohne Oberflächenstörungen zu verursachen.

Quaternäre Stickstoffverbindungen im Allgemeinen und Polysiloxanverbindungen mit einem quaternären Stickstoffrest im speziellen lassen sich einfach mit Hilfe von Triphenylmethanfarbstoffen im alkalischen nachweisen. Beispiele für solche Farbstoffe sind Bromphenolblau oder Indophenolblau. Diese Farbstoffe verfärben sich bei Anwesenheit von Ammoniumverbindungen blau.

Gemäß der vorliegenden Erfindung sind mit "quaternären Stickstoffresten" Ammoniumreste gemeint, deren positive Ladung durch ein geeignetes Anion, wie beispielsweise Chlorid oder Acetat, neutralisiert werden kann.

Für das Trennmittel ist die Verwendung von Wasser als Trägermedium bevorzugt, da Wasser aus Umweltschutzgründen das ökologisch geringste Gefährdungspotential besitzt. Die Mitverwendung von organischen Lösungsmitteln, insbesondere flüchtigen organischen Lösungsmitteln, wie Alkoholen und aliphatischen Kohlenwasserstoffen, ist denkbar, da diese Verbindungen durchaus zur besseren Verarbeitung des erfindungsgemäßen Trennmittels beitragen. Jedoch fallen unter das erfindungsgemäße Trennmittel auch solche, die auf den Einsatz von Wasser als Trägermedium gänzlich verzichten und nur auf ein oder mehrere organische Lösungsmittel zurückgreifen.

In einer besonders bevorzugten Ausführungsform enthält das Trennmittel weitere Komponenten, die ausgewählt sind aus der Gruppe bestehend aus Emulgator(en), Katalysator(en), Schaumstabilisator(en), Viskositätsmodifizierer(n), Konservierungstoff(en) sowie ggf. weiteren Hilfs- und Zusatzstoffen. Besonders bevorzugt umfasst das Trennmittel in Gewichtsprozent, bezogen auf das Gesamtgewicht des Trennmittels,
a) 0,5-40 Gew.-% einer weiteren trennaktiven Substanz ausgewählt aus der Gruppe der Seifen, Öle, Wachse, Silikonwachse und Silikone ohne quaternären Ammoniumrest
b) 0,1-20 Gew.-%, bevorzugt 0,5-20 Gew.%, Polysiloxan mit quaternärem Stickstoffrest
c) 0,5-20 Gew.-% Hilfsstoffe und Zusatzstoffe
d) Ad 100% Trägermedium.

Besonders bevorzugt umfasst das Trennmittel. in Gewichtsprozent, bezogen auf das Gesamtgewicht des Trennmittels,
a) 0,5-40 Gew.-% zumindest einer trennaktiven Substanz ausgewählt aus der Gruppe der Seifen, Öle, Wachse, Silikonwachse und Silikone ohne quaternären Ammoniumrest
b) 0,1-20 Gew.-%, bevorzugt 0,5-20 Gew.%, Polysiloxan mit quaternärem Stickstoffrest
c) 0,1-10 Gew.% Emulgator
d) 0,1-5 Gew.-% Katalysator
e) 0,1-5 Gew.-% Schaumstabilisator
f) 0,1-5 Gew.% Viskositätsmodifizierer
g) 0,1-2 Gew.% Konservierungsstoff, wie Bakterizide, Fungizide und Antioxidantien
h) 0,1-10 Gew.% weitere Hilfsstoffe und/oder Zusatzstoffe
i) Ad 100 Gew.-% Wasser

Als weitere trennktive Substanzen sind insbesondere die folgenden bevorzugt:
Wachse, d.h. flüssige, feste, natürliche oder synthetische Wachse, die behandelt, chemisch modifiziert oder verseift wurden; Ester von Carbonsäuren mit Alkoholen oder Fettalkoholen; Metallseifen, wie Alkali- oder Erdalkalimetallsalze von Fettsäuren; Öle oder sonstige flüssige Kohlenwasserstoffe, wie Weißöle oder Polyalphaolefine; Silikone, wie Polydimethylsiloxan, ggf. substituiert mit Polyethern, aliphatischen, aromatischen, aminoaliphatischen Kohlenwasserstoffresten, halogenierten aliphatischen Resten und/oder amidoaliphatischen Kohlenwasserstoffreste.

Als übliche Hilfs- und Zusatzstoffe können ein oder mehrere Verbindungen ausgesucht werden aus der Gruppe der

### i) Emulgatoren

Anionische Emulgatoren, wie Alkylethercarboxylate, Alkylsulfate; nicht-ionische Emulgatoren wie ethoxylierte Fettalkohole, ethoxylierte Oxoalkohole und andere Alkoholether, Fettamine wie Dialkylamine, Fettsäurealkanolamide, Fettsäureester mit Alkoholen, wie Sorbitolester, kationische Emulgatoren, wie sauer gestellte Dialkyldimethylamine, quartäre Stickstoffverbindungen; amphothere Tenside; wobei die Tenside allesamt in Mengen von 0,1-10 Gew.%, bevorzugt 0,5-10 Gew.-% mit verwendet werden können.

### ii) Katalysatoren

Typischerweise können solche Katalysatoren verwendet werden, die für die Polyurethanreaktion bekannt sind, beispielsweise Lewis-Säuren oder Lewis-Basen, wie tertiäre Amine;

### iii) Schaumstabilisatoren

Als Schaumstabilisatoren können die für die Polyurethanchemie üblichen und bekannten Schaumstabilisatoren verwendet werden.

### iv) Viskositätsmodifizierer

Als Viskositätsmodifizierer können beispielsweise Verdickungsmittel wie Cellulosederivate oder Xanthan eingesetzt werden.

### v) Konservierungsstoffe

Übliche Konservierungsstoffe, wie Bakterizide, Fungizide, Algizide oder Antioxidantien, können verwendet werden.

### vi) Lösungsvermittler

Hier kommen übliche organische, aliphatische und aromatische Lösungsmittel, wie Alkohole oder Glykole, in Betracht.

Weitere Merkmale und Vorteile des Trennmittels ergeben sich aus der folgenden detaillierten Beschreibung von Ausführungsbeispielen.

Dabei wurden zunächst zwei Basisrezepturen trennaktiver Substanzen ohne Polysiloxan mit quaternärem Stickstoffrest wie folgt hergestellt:
Rezeptur I
   2% Polywax 655 (Wachs), Hersteller Petrolite,
   98% Exxon D60 (flüchtiger Kohlenwasserstoff), Hersteller Exxon Chemicals
Rezeptur II
   2% Polywax 655 (Wachs), Hersteller Petrolite
   1% Unithox 450 (Emulgator, Fettalkoholethoxylat), Hersteller Petrolite
   2% Exxon D60 (flüchtiger Kohlenwasserstoff), Hersteller Exxon Chemicals
   95,0% Wasser

Sofern nicht anderweitig ausgeführt, sind alle Prozentangaben Gewichtsprozentangaben, jeweils bezogen auf das Gesamtgewicht des hergestellten Produkts.

Zu der gemäß Rezeptur I hergestellten Dispersion (hergestellt durch Einrühren des Wachses in den Kohlenwasserstoff) wurden jeweils 2 Gew.% der unten angegeben Additive (1)-(6) zugegeben, indem diese mit den trennaktiven Substanzen aufgeschmolzen wurden.

Die in der Rezeptur II hergestellte Emulsion wurde durch Aufschmelzen des Wachses mit dem Emulgator und anschließendem Dispergieren in heißem Wasser hergestellt. Auch zu dieser Emulsion wurden jeweils die unten angegebenen Additive (1)-(8) in den in der Tabelle gezeigten Mengen zugegeben. Wenn diese Additive als wasserlöslich beschrieben waren, wurden sie einfach in das Wasser zugegeben, oder, wenn sie als wasserunlöslich beschrieben waren, zuvor mit den trennaktiven Substanzen aufgeschmolzen.

Alle so hergestellten Trennmittel wurden bezüglich ihrer Fähigkeit zur Entformung von Polyurethanformkörpern getestet. Die hergestellten Prüfplatten wurden auf ihr Erscheinungsbild wie Optik (Homogenität und Zelligkeit) und Haptik (Touch) bewertet.

Für die durchgeführten Versuche wurde das hergestellte Trennmittel mit einer handelsüblichen Sprühpistole in eine 30 x 30 cm große Probenform, die auf etwa 60°C vorgewärmt wurde, gesprüht. Der Trennfilm wurde 2 Minuten getrocknet. Anschließend wurde die Form mit einem handelsüblich erhältlichen Kaltweich-PU-Schaum, wie er zur Herstellung von Kaltweich-Formschäumen verwendet wird, gefüllt. Hierzu wurden die beiden Schaumkomponenten entsprechend den Herstellerangaben mit einem Schnellaufrührer vermischt und in die Form gebracht. Die Form wurde verschlossen und der Schaum gemäß der Herstellerangaben gehärtet. Beispielhaft wurde hier A = Elastoflex W5515/1 und B = ISO 135/22 verwendet. Die Schaumkomponenten wurden im Verhältnis von 100:50 mit einem schnell laufenden Rührblatt vermischt und nach Eingabe in die Form bei 55-62°C ausgehärtet.

Die folgenden Additive wurden verwendet:
(1) DC-Fluid 190, Silikonpolyglykolether, Hersteller Dow Corning
(2) DC-Fluid 193, Silikonpolyglykolether, Hersteller Dow Corning
(3) DC-Fluid 198, Silikonpolyglykolether, Hersteller Dow Corning
(4) TP3877^{®}, Polysiloxan mit quaternärem Stickstoffrest, Hersteller Momentive
(5) Hansa^{®} ADD2070, Polysiloxan mit quaternärem Stickstoffrest, Hersteller CHT Beitlich
(6) Tegopren^{®} 6922, Polysiloxan mit quaternärem Stickstoffrest, Hersteller Evonik Industries
(7) Momentive^{®} SF 1642 Silikonwachs mit C30-C45 Alkylketten
(8) Hansa^{®} ADD 3030 Silikonwachs mit C24-C54 Alkylketten

Die folgenden Tabellen zeigen die erhaltenen Ergebnisse hinsichtlich Trennwirkung, Oberfläche und Touch.

**Tabelle 1: Trennmittel basierend auf Dispersion nach Rezeptur I**

| Probe | Trennwirkung | Oberfläche | Touch |
|---|---|---|---|
| 0 (entspricht einer Probe ohne Zusatz eines der Additive (1)-(6) | O | O | O |
| 1% Additiv 1 | - | + | + |
| 1% Additiv 2 | - | O | O |
| 1% Additiv 3 | - | O | O |
| 1% Additiv 4 | + | ++ | ++ |
| 1% Additiv 5 | + | ++ | ++ |
| 1% Additiv 6 | + | ++ | ++ |
| 1% Additiv 7 | ++ | - | - |
| 1% Additiv 8 | ++ | - | - |
| 1% Additiv 6 1% Additiv 7 | ++ | ++ | ++ |
| 1% Additiv 5 1% Additiv 8 | ++ | ++ | ++ |
| 1% Additiv 4 1% Additiv 7 | ++ | ++ | ++ |
| 1% Additiv 4 1% Additiv 8 | ++ | ++ | ++ |

### Bewertung:

Trennwirkung (++): Formteil liegt lose in der Form; (+): Formteil lässt sich mit geringem Kraftaufwand entformen; (O): Formteil lässt sich zerstörungsfrei mit Kraftaufwand entformen; (-): Formteil lässt sich mit Einrissen entformen; (--): Formteil lässt sich nicht entformen.
Oberfläche: (++): kleinzellig, offen; (+) kleinzeilig, geschlossen; (O): grobzellig, (-): Störungen
Touch: (++): trocken, softartig; (+): trocken, glatt; (O): trocken strohig; (-): schmierig

**Tabelle 2: Trennmittel basierend auf einer Emulsion nach Rezeptur II**

| Probe | Trennwirkung | Oberfläche | Touch |
|---|---|---|---|
| 0 (entspricht einer Probe ohne Zusatz eines der Additive (1)-(6) | O | O | O |
| 1% Additiv 1 | - | + | + |
| 1% Additiv 2 | - | O | O |
| 1% Additiv 3 | - | O | O |
| 1% Additiv 4 | + | ++ | ++ |
| 1% Additiv 5 | + | ++ | ++ |
| 1% Additiv 6 | + | ++ | ++ |
| 1% Additiv 7 | ++ | - | - |
| 1% Additiv 8 | ++ | - | - |
| 1% Additiv 6; 1% Additiv 7 | ++ | ++ | ++ |
| 1% Additiv 5; 1% Additiv 8 | ++ | ++ | ++ |
| 1% Additiv 4; 1% Additiv 7 | ++ | ++ | ++ |
| 1% Additiv 4; 1% Additiv 8 | ++ | ++ | ++ |

### Bewertung:

Trennwirkung (++): Formteil liegt lose in der Form; (+): Formteil lässt sich mit geringem Kraftaufwand entformen; (O): Formteil lässt sich zerstörungsfrei mit Kraftaufwand entformen; (-): Formteil lässt sich mit Einrissen entformen; (--): Formteil lässt sich nicht entformen.
Oberfläche: (++): kleinzellig, offen; (+) kleinzellig, geschlossen; (O): grobzellig, (-): Störungen
Touch: (++): trocken, softartig; (+): trocken, glatt; (O): trocken strohig; (-): schmierig

Die Ergebnisse der Versuche belegen eindeutig, dass die verwendeten quarternären Silikonverbindungen allein keinerlei Trennwirkung besitzen und auch die Oberfläche der Schaumteile nicht beeinflussen. Den positiven Einfluss auf die Oberfläche und die Trennwirkung erzielt man erst, wenn besagte Verbindungen in Kombination mit trennaktiven Substanzen wie Wachsen kombiniert werden. In diesem Fall wird die Trennwirkung verbessert, die Oberflächen der gefertigten Teile erscheinen gleichmäßig und die Haptik wird als weich empfunden. Einen synergistischen Effekt erzielt man, wenn die quarternären Silikonverbindungen mit alkylierten, festen Silikonen, den Silikonwachsen, kombiniert werden. In diesem Fall werden Bauteile erzeugt, die hinsichtlich Oberfläche, Haptik und Trennwirkung außerordentlich gute Ergebnisse erzielen.

Letzteres führt dazu, dass sich mit den Beispielrezepturen gefertigte Teile ohne die nachträgliche Verwendung von Beziehhilfen wie ACMOS 23-5008 beziehen und verbauen lassen. Normalerweise wird für diesen Prozess des Beziehens ein ölhaltiges Gleitmittel verwendet. Auf diesen Prozessschritt kann verzichtet werden.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verwendung eines Trennmittels zur Herstellung von Polyurethan-Formkörpern, wobei das Trennmittel umfasst:
i) zumindest ein Trägermedium ausgewählt aus Wasser und/oder organischem Lösungsmittel,
ii) zumindest ein Polysiloxan, das zumindest einen quaternären Stickstoffrest aufweist,
iii) vorzugsweise zumindest ein bei Raumtemperatur festes Polysiloxan, vorzugsweise ausgewählt aus der Gruppe der Silikonharze und/oder Silikonwachse, und
iv) zumindest eine trennaktive Substanz ausgewählt aus der Gruppe der Wachse, Polysiloxane ohne quaternären Stickstoffrest, Seifen und Öle, vorzugsweise ausgewählt aus der Gruppe der reaktiven Polysiloxane ohne quaternären Stickstoffrest, reaktiven Seifen oder reaktiven Öle.

2. Verwendung eines Trennmittels zur Herstellung von Polyurethan-Formkörpern nach Anspruch 1, **dadurch gekennzeichnet, dass** das Polysiloxan, das zumindest einen quaternären Stickstoffrest aufweist, die folgende Struktur aufweist: 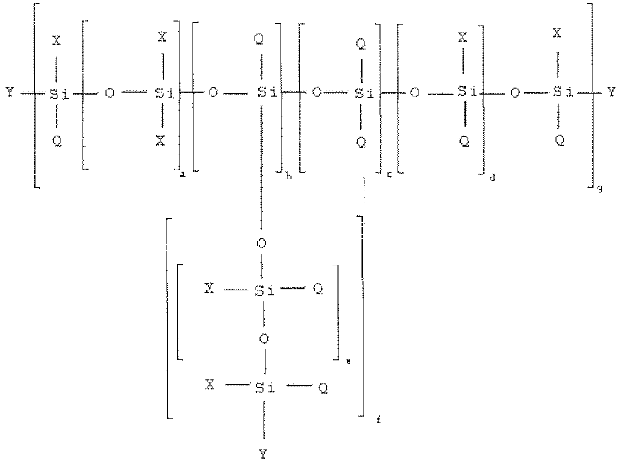
mit a = 1-500, b = 0-50, c = 0-20, d" 0-500, e = 0-500, f = 0-1 und g = 1-30;
wobei jedes X unabhängig voneinander ausgewählt ist aus der Gruppe bestehend aus Alkyl, Alkenyl, Alkylen, Aryl, Carbinol, Hydroxy, Alkoxy, Polyalkylenoxy, Epoxy-haltigem Rest, Keto-haltigem Rest, Carboxy-haltigem Rest, Amin-haltigem Rest, Amidhaltigem Rest und Kombinationen derselben;
Y unabhängig ausgewählt ist aus der Gruppe bestehend aus Alkyl, Alkenyl, Akylen, Aryl, Carbinol, Hydroxy, Alkoxy, Polyalkylenoxy, Epoxy-haltigem Rest, Keto-haltigem Rest, Carboxy-haltigem Rest, Amin-haltigem Rest, Amid-haltigem Rest und Kombinationen derselben, oder wenn die Grundstruktur in einem Block-Copolymer vorliegt, Y unabhängig ausgewählt ist aus der Gruppe bestehend aus Alkylen, -O-, -NR-, -NCOOR-, -RNCONR- und Kombinationen derselben, wobei R ausgewählt ist aus der Gruppe bestehend aus H, Alkyl, Alkenyl, Aryl;
zumindest ein Q einen quaternären Stickstoffrest enthält, der über eine organische Gruppe am Silizium angebunden ist, wobei die organische Gruppe bevorzugt eine Alkylengruppe, Alkylenoxid-Gruppe, Polyalkylenoxid-Gruppe, Epoxy-haltige Gruppe, Keto-Gruppe, Carboxy-Gruppe, Amin-Gruppe, Amid-Gruppe oder Kombinationen

3. Verwendung eines Trennmittels zur Herstellung von Polyurethan-Formkörpern nach Anspruch 1 oder 2, **dadurch gekennzeichnet, dass** der quaternäre Stickstoffrest die Formel N⁺(R¹)(R²)(R³)(R⁴) aufweist, wobei jedes R¹-R⁴ unabhängig voneinander ausgewählt ist aus H, C₁-C₂₀-Alkyl, C₁-C₂₀-Alkenyl und C₁-C₁₀-Alkoxy, wobei insbesondere die Alkyl-oder Alkenylreste bevorzugt weitere funktionelle Gruppen, wie beispielsweise Hydroxylgruppen, Ketogruppen und/oder Carboxygruppen, aufweisen können.

4. Verwendung eines Trennmittels zur Herstellung von Polyurethan-Formkörpern nach einem der vorangehenden Ansprüche, **dadurch gekennzeichnet, dass** die positive Ladung des quaternären Stickstoffrests durch ein Anion, vorzugsweise Chlorid oder Acetat, neutralisiert ist.

5. Verwendung eines Trennmittels zur Herstellung von Polyurethan-Formkörpern nach einem der vorangehenden Ansprüche, dadurch gekennzeichet, dass die weitere trennaktive Substanz ausgewählt ist aus flüssigen, festen, natürlichen und synthetischen Wachsen, optional behandelt, chemisch modifiziert oder verseift, Estern von Carbonsäuren mit Alkoholen oder Fettalkoholen, Metallseifen, Ölen oder sonstigen flüssigen Kohlenwasserstoffen oder Silikonen ohne quaternären Stickstoffrest.

6. Verwendung eines Trennmittels zur Herstellung von Polyurethan-Formkörpern nach einem der Ansprüche 1 bis 5 als externes Trennmittel.

## Claims

1. Use of a release agent for the manufacture of polyurethane molded bodies, wherein the release agent comprises:
i) at least one carrier medium selected from water and/or organic solvent,
ii) at least one polysiloxane, which has at least one quaternary nitrogen residue,
iii) preferably at least one polysiloxane, preferably selected from the group of silicone resins and/or silicone waxes, solid at ambient temperature, and
iv) at least one release-active substance selected from the group of waxes, polysiloxanes without quaternary nitrogen residue, soaps and oils, preferably selected from the group of reactive polysiloxanes without quaternary nitrogen residue, reactive soaps or reactive oils.

2. Use of a release agent for the manufacture of polyurethane molded bodies according to claim 1, **characterized in that** the polysiloxane, which has at least one quaternary nitrogen residue, having the following structure: 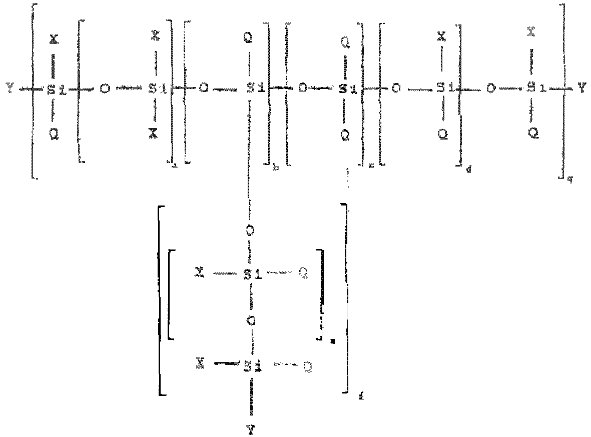
where a = 1-500, b = 0-50, c= 0-20, D = 0-500, e 0-500, f = 0-1 and g = 1-30;
wherein each X, independently of one another, is selected from the group consisting of alkyl, alkenyl, alkylene, aryl, carbinol, hydroxyl, alkoxy, polyalkylenoxy, epoxy containing residue, keto containing residue, carboxy containing residue, amine containing residue, amide containing residue and combinations of the same;
Y is independently selected from the group consisting of alkyl, alkenyl, alkylene, aryl, carbinol, hydroxy, alkoxy, polyalkylenoxy, epoxy containing residue, keto containing residue, carboxy containing residue, amine containing residue, amide containing residue and combinations of the same, or if the base structure is present in a block copolymer, Y is independently selected from the group consisting of alkylene, -O-, -NR, -NCOOR-, -RNCONR- and combinations of the same, wherein R is selected from the group consisting of H, alkyl, alkenyl, aryl;
at least one Q contains a quaternary nitrogen residue, which is bound to the silicon via an organic group, wherein the organic group preferably contains an alkylene group, an alkylene oxide group, a polyalkylene oxide group, an epoxy containing group, a keto group, a carboxy group, an amine group, an amide group or combinations of the same and every other Q is selected from X.

3. Use of a release agent for the manufacture of polyurethane molded bodies according to claim 1 or 2, **characterized in that** the quaternary nitrogen residue has the formula N⁴ (R¹) (R²) (R³) (R⁴), wherein each R¹-R⁴, independently of one another, is selected from H, C₁-C₂₀-alkyl, C₁-C₂₀-alkenyl and C₁-C₁₀-alkoxy, in particular the alkyl- or alkenyl residues preferably possibly having further functional groups, as for example hydroxyl groups, keto groups and/or carboxy groups.

4. Use of a release agent for the manufacture of polyurethane molded bodies according to any one of the above claims, **characterized in that** the positive charge of the quaternary nitrogen residue is neutralized by an anion, preferably a chloride or an acetate.

5. Use of a release agent for the manufacture of polyurethane molded bodies according to any one of the above claims, **characterized in that** the further release-active substance is selected from liquid, solid, natural and synthetic waxes, optionally treated, chemically modified or saponified, esters of carbonic acids with alcohols or fatty alcohols, metal soaps, oils or other liquid hydrocarbons or silicones without quaternary nitrogen residue.

6. Use of a release agent for the manufacture of polyurethane molded bodies according to any one of claims 1 to 5 as external release agent,

## Revendications

1. Utilisation d'un agent anti-adhérence pour la fabrication de corps moulés en polyuréthane, l'agent anti-adhérence comprenant :
i) au moins un véhicule sélectionné parmi l'eau et/ou un solvant organique,
ii) au moins un polysiloxane, qui comporte au moins un résidu d'azote quaternaire,
iii) préférablement au moins un polysiloxane, préférablement sélectionné dans le groupe constitué de résines de silicium et/ou de cires de silicium, solides à température ambiante, et
iv) au moins une substance active anti-adhérente sélectionnée dans le groupe constitué de cires, de polysiloxanes exempts de résidu d'azote quaternaire, de savons et d'huiles, préférablement sélectionnés dans le groupe constitué de polysiloxanes réactifs exempts de résidu d'azote quaternaire, de savons réactifs ou d'huiles réactives.

2. Utilisation d'un agent anti-adhérence pour la fabrication de corps moulés en polyuréthane selon la revendication 1, **caractérisée en ce que** le polysiloxane, qui possède au moins un résidu d'azote quaternaire, a la structure suivante : 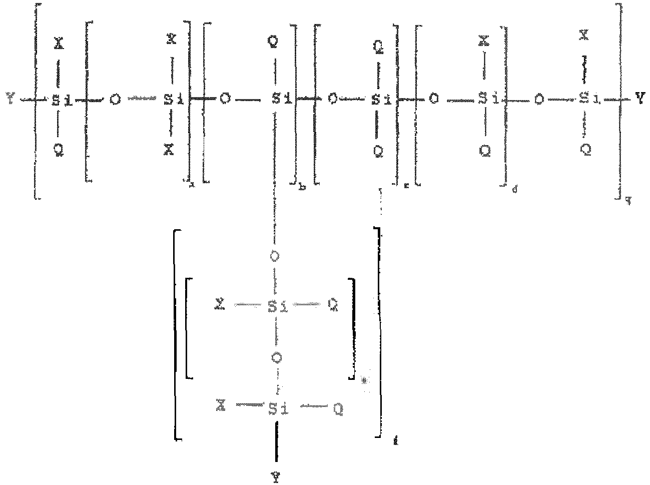
où a = 1 à 500, b = 0 à 50, c= 0 à 20, D = 0 à 500, e 0 à 500, f = 0 à 1 et g 1 à30;
où chaque X, indépendamment l'un de l'autre, est sélectionné dans le groupe constitué d'alkyle, d'alcényle, d'alkylène, d'aryle, de carbinol, d'hydroxyle, d'alcoxy, de polyalkylenoxy, de résidu contenant de l'époxy, de résidu contenant de la cétone, de résidu contenant du carboxy, de résidu contenant de l'amine, de résidu contenant de l'amide et de combinaisons de ces composés ;
Y est indépendamment sélectionné dans le groupe constitué d'alkyle, d'alcényle, d'alkylène, d'aryle, de carbinol, d'hydroxy, d'alcoxy, de polyalkylenoxy, de résidu contenant de l'époxy, de résidu contenant de la cétone, de résidu contenant du carboxy, de résidu contenant de l'amine, de résidu contenant de l'amide et de combinaisons de ces composés, ou si la structure de base est présente dans le copolymère bloc, Y est indépendamment sélectionné dans le groupe constitué d'alkylène, de -O-, de -NR, de -NCOOR-, de -RNCONR- et de combinaisons de ces composés, où R est sélectionné dans le groupe constitué de H, d'alkyle, d'alcényle, d'aryle ;
au moins un Q contient un résidu d'azote quaternaire, qui est lié au silicium par le biais d'un groupe organique, ce dernier contenant préférablement un groupe alkylène, un groupe d'oxyde d'alkylène, un groupe d'oxyde de polyalkylène, un groupe contenant de l'époxy, un groupe contenant de la cétone, un groupe carboxy, un groupe aminé, un groupe amide ou des combinaisons de ces composés et un Q sur deux est sélectionné parmi X.

3. Utilisation d'un agent anti-adhérence pour la fabrication de corps moulés en polyuréthane selon la revendication 1 ou la revendication 2, **caractérisé en ce que** le résidu d'azote quaternaire répond à la formule N⁴ (R¹) (R²) (R³) (R⁴), dans laquelle chaque R¹ à R⁴, indépendamment l'un de l'autre, est sélectionné parmi H, alkyle en C₁ à C₂₀, alcényle en C₁ à C₂₀ et alcoxy en C₁ à C₁₀, en particulier les résidus d'alkyle ou d'alcényle ont préférablement d'autres groupes fonctionnels, comme par exemple des groupes hydroxyle, des groupes cétone et/ou des groupes carboxy.

4. Utilisation d'un agent anti-adhérence pour la fabrication de corps moulés en polyuréthane selon l'une quelconque des revendications précédentes, **caractérisée en ce que** la charge positive du résidu d'azote quaternaire est neutralisée par un anion, préférablement un chlorure ou un acétate.

5. Utilisation d'un agent anti-adhérence pour la fabrication de corps moulés selon l'une quelconque des revendications précédentes, **caractérisée en ce que** l'autre substance active anti-adhérente est sélectionnée parmi un liquide, un solide, des cires naturelles et synthétiques, éventuellement traitées, chimiquement modifiées ou saponifiées, des esters d'acides carboniques avec des alcools ou des alcools gras, des savons métalliques, des huiles ou d'autres hydrocarbures ou siliciums liquides exempts de résidu d'azote quaternaire.

6. Utilisation d'un agent anti-adhérence pour la fabrication de corps moulés en polyuréthane selon l'une quelconque des revendications 1 à 5 en tant qu'agent anti-adhérence externe.
